# EUROPEAN PATENT APPLICATION

(11) **EP 4 198 095 A1**
(43) Date of publication of application: **21.06.2023**
(21) Application number: 22161479.5
(22) Date of filing: 10.03.2022
(51) Int. Cl.: C09D 5/00

(54) **BIODEGRADABLE POLYMER FOR COATING SUBSTRATES**

(30) Priority: 15.12.2021 PT 2021117641
(71) Applicant: Marques Ribeiro, Cid Ricardo, 4410-104 São Félix da Marinha, Vila Nova de Gaia (PT)
(72) Inventor: Marques Ribeiro, Cid Ricardo, 4410-104 São Félix da Marinha, Vila Nova de Gaia (PT)
(74) Representative: Patentree

(57) **Abstract**

The present disclosure describes a composition for coating a substrate obtainable by a process comprising the following steps: mixing stannous octoate and castor oil to obtain a first solution; and contacting the first solution with a second solution comprising methylene diphenylisocyanate. Also described is a biodegradable laminated material for food packaging, comprising a substrate coated with the composition described, as well as the method for obtaining the laminated material; as well as an apparatus for coating a substrate with the composition described.

## Description

### TECHNICAL FIELD

The present description relates to a vegetable polymer composition for use in packaging coatings, in particular food packaging.

### BACKGROUND

The use of disposable plastic containers for accommodating and storing foodstuffs is widely spread throughout the world. However, these utensils have a great associated environmental impact, since most of them cannot be recycled, being therefore discarded in dumps or sanitary landfills.

In order to circumvent this problem, there is a great focus on the development of more sustainable solutions that make it possible to reduce the use of plastics in packaging.

Models made of plastic or polyethylene terephthalate (PET), aluminium and polystyrene do not allow the use of an oven for defrosting or heating, and also do not degrade easily in nature. On the other hand, models made of paperboard coated with plastic or PET have a low resistance to the use of oven, either for defrosting or heating, and also do not degrade easily in nature. Furthermore, materials prepared from coated paperboard are hardly recyclable as the plastic film cannot be treated by conventional recycling methods. Finally, models produced in aluminium-coated paperboard also have a low resistance to the use of oven and cannot be used in microwave ovens for defrosting or heating. Additionally, this type of material does not degrade easily in nature, and the recycling process is complex.

It is therefore necessary to develop materials resistant to high temperatures, in particular to temperatures felt during the heating of foodstuffs in conventional or microwave ovens; which allow a uniform temperature distribution during heating; and which are sustainable, recyclable, biodegradable and compostable.

Document BR 202019010577-7 discloses a sustainable tray for frozen or non-frozen foodstuffs, produced in moulded cellulose pulp and coated on the inside with an insulating barrier based on vegetable polyurethane.

Document WO2018/112585 discloses a corrugated cardboard packaging with biodegradable or recyclable thermal insulation. The packaging is comprised of two separate parts: an outer box made of corrugated cardboard, and an inner part comprising a biodegradable insulating material, which is a rigid polyurethane foam of natural origin, in particular polyurethane obtained from castor oil, cassava starch or coconut fibre. While the outer box is adaptable in its dimensions and shapes, the inner part is adaptable only in its dimensions.

These facts are described in order to illustrate the technical problem solved by the embodiments of the present document.

### GENERAL DESCRIPTION

It is an objective of the present embodiments to provide a solution for the sustainable packaging of food products. The coating composition described in the present disclosure can replace the packaging models already present on the market manufactured with fossil elements, and with a high environmental negative impact, i.e. plastic packaging, polystyrene packaging, aluminium packaging, paperboard with plastic film packaging and carton packaging for foodstuffs and beverages with plastic and aluminium paperboard (long life packaging).

The present disclosure describes a composition for coating a substrate, wherein the composition is obtainable by a process comprising the following steps:
mixing stannous octoate and castor oil to obtain a first solution, wherein the mass ratio between stannous octoate and castor oil ranges between 10:1000-20:1000;
contacting the first solution with a second solution comprising methylene diphenylisocyanate, wherein the mass ratio between the first solution and the second solution ranges between 1:1 and 3.5:1.

In an embodiment, the mass ratio between the first solution and the second solution ranges between 2:1 and 2.5:1.

In an embodiment, the mass ratio between the first solution and the second solution is 2.5:1.

In an embodiment, the mass ratio between stannous octoate and castor oil ranges between 10:1000-1:1000.

In an embodiment, the mass ratio between stannous octoate and castor oil is 10:1000.

In an embodiment, the mass ratio between the first solution and the second solution is 2.5:1; and the mass ratio between stannous octoate and castor oil is 10:1000.

In an embodiment, the substrate is selected from paper, Kraft paper, pasteboard, cardboard, vegetable fibres, food waste fibres, or mixtures thereof.

An aspect of the present disclosure comprises a method for obtaining the composition described, comprising the following steps:
mixing stannous octoate and castor oil to obtain a first solution, wherein the mass ratio between stannous octoate and castor oil ranges between 10:1000-20:1000; preferably 10:1000-1:1000, even more preferably 10:1000;
contacting the first solution with a second solution comprising methylene diphenylisocyanate, wherein the mass ratio between the first solution and the second solution ranges between 1:1 and 3.5:1; preferably 2:1 and 2.5:1; even more preferably 2.5:1;
optionally curing the coating at a temperature ranging between 110 and 150 °C; for 20 to 30 seconds.

In an embodiment, the mass ratio between the first solution and the second solution is 2.5:1; and the mass ratio between stannous octoate and castor oil is 10:1000.

The present disclosure further describes a biodegradable laminated material for food packaging comprising
a substrate; and
a coating layer;
   wherein the coating layer comprises the composition described.

In an embodiment, the substrate of the biodegradable laminated material is selected from paper, Kraft paper, pasteboard, cardboard, vegetable fibres, food waste fibres, or mixtures thereof.

In an embodiment, the substrate is coated on at least one of its sides by the coating layer.

In an embodiment, the thickness of the coating layer ranges between 5 and 30 µm.

In an embodiment, the thickness of the coating layer ranges between 10 and 20 µm.

An aspect of the present disclosure concerns a method for obtaining the biodegradable laminated material described, comprising the steps of:
mixing stannous octoate and castor oil to obtain a first solution, wherein the mass ratio between stannous octoate and castor oil ranges between 10:1000-20:1000; preferably 10:1000-1:1000, even more preferably 10:1000;
contacting the first solution with a second solution comprising methylene diphenylisocyanate in order to obtain a polymeric mixture wherein the mass ratio between the first solution and the second solution ranges between 1:1 and 3.5:1; preferably 2:1 and 2.5:1; even more preferably 2.5:1;
coating a substrate with the polymeric mixture;
curing the coating for 20 to 40 seconds, preferably 30 seconds, at a temperature between 100 and 150 °C.

In an embodiment, the mass ratio between the first solution and the second solution is 2.5:1; and the mass ratio between stannous octoate and castor oil is 10:1000.

In an embodiment, the curing step is performed at 110 °C for 30 seconds.

In an embodiment, the method for obtaining the biodegradable laminated material further comprises a step of moulding the biodegradable laminated material. In an embodiment, moulding is performed by thermoforming or folding.

The present disclosure describes an article comprising the composition or the biodegradable laminated material described.

In an embodiment, the article is selected from boxes, containers, trays, carton packaging, plates, or cups.

An aspect of the present disclosure comprises the use of the article described for the storage, preparation and/or transport of foodstuffs.

The present disclosure further describes an apparatus for coating a substrate with the composition described comprising:
a reservoir with two compartments, a first one for containing a solution of methylene diphenylisocyanate and a second compartment for containing a mixture of stannous octoate and castor oil;
a mixer connected to each one of the two compartments of the reservoir for obtaining a polymeric mixture;
a perforated dispenser for distributing the polymeric mixture over a substrate,
a set of three rollers arranged in such a way as to allow the substrate to pass and apply the polymeric mixture on the substrate;
a conveyor belt for moving the substrate and an oven for curing the coating, wherein the polymeric mixture is obtained at the mixer outlet after the reaction of methylene diphenylisocyanate with stannous octoate and castor oil; and wherein the coated substrate is deposited by the rollers on the conveyor belt and guided to the oven where it is cured.

In an embodiment, the volume of polymeric mixture applied on the substrate is determined by the distance between the rollers.

In an embodiment, the distance between rollers ranges between 10 and 30 µm.

In an embodiment, the length of the conveyor belt ranges between 2 and 5 meters, being preferably 3.5 meters.

In an embodiment, the mixer is connected to the reservoir via hoses.

These facts are described in order to illustrate the technical problem addressed by the present invention.

### BRIEF DESCRIPTION OF THE DRAWINGS

For an easier understanding, figures are herein attached which represent preferred embodiments not intended to limit the object of the present description.
**Figure 1****:** Schematic representation of an embodiment of apparatus **1** for coating a substrate with the composition described in the present disclosure.

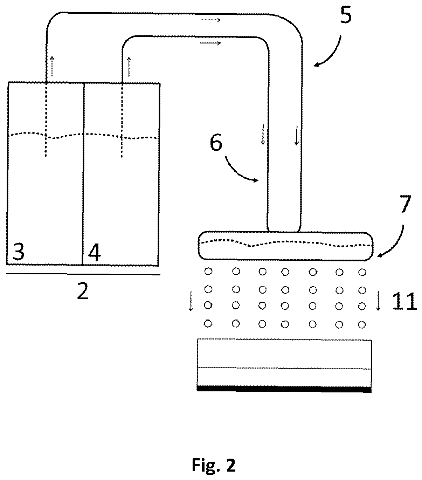

**Figure 2****:** Schematic representation of an embodiment of reservoir **2,** connecting hoses **5, 6** and perforated pipe **7.**

### DETAILED DESCRIPTION

The present disclosure describes a composition for coating a substrate obtainable by a process comprising the following steps: mixing stannous octoate and castor oil to obtain a first solution; and contacting the first solution with a second solution comprising methylene diphenylisocyanate. A biodegradable laminated material for food packaging is also described comprising a substrate coated with the composition described, as well as the method for obtaining the laminated material; as well as an apparatus for coating a substrate with the composition described.

In an embodiment, the composition described comprises a castor oil-based vegetable polymer resin (CAS 8001-79-4) for coating and protecting a surface or substrate, in particular paper.

In an embodiment, the composition is obtained after mixing a solution of stannous octoate (CAS 301-10-0) and castor oil with methylene diphenylisocyanate (CAS 101-68-8), at room temperature. For the scope and interpretation of the present disclosure, it is defined that "room temperature" should be considered as a temperature between 15-30 °C, preferably between 18-25 °C, more preferably between 20-22 °C.

In an embodiment, the composition is obtainable by a process comprising the following steps: mixing stannous octoate and castor oil to obtain a first solution, wherein the mass ratio between stannous octoate and castor oil ranges between 10:1000-20:1000; contacting the first solution with a second solution comprising methylene diphenylisocyanate, wherein the mass ratio between the first solution and the second solution ranges between 1:1 and 3.5:1.

In an embodiment, the mass ratio between the first solution and the second solution ranges between 2:1 and 2.5:1. In a preferred embodiment, the mass ratio between the first solution and the second solution is 2.5:1.

In an embodiment, the mass ratio between stannous octoate and castor oil ranges between 10:1000-1:1000. In a preferred embodiment, the mass ratio between stannous octoate and castor oil is 10:1000.

In a preferred embodiment, the mass ratio between the first solution and the second solution is 2.5:1; and the mass ratio between stannous octoate and castor oil is 10:1000.

In an embodiment, the paper surface is selected from paper, Kraft paper, pasteboard, cardboard, vegetable fibres, food waste fibres, or mixtures thereof. In another embodiment the paper surface is roll paper or loose sheet paper.

In an embodiment, the composition described is used as a paper surface coating, forming a coating in the form of a polymeric film after curing. Surprisingly, the composition described allows drying/curing the vegetable film in 30 seconds.

In an embodiment, the application and curing of the disclosed composition on the paper surface results in all types of paper being protected against moisture, grease, acids, alcohols, and vapours. The coated paper is still resistant to low temperatures, in particular to cold storage temperatures (-20 to 4 °C), and to heating with a conventional oven or a microwave oven (150 to 240 °C).

In an embodiment, the coated paper is resistant to high and low temperatures, allowing the use in freezers, conventional and microwave ovens.

In an embodiment, the paper coated by the composition described is suitable for contact with foodstuffs and ready-to-eat food for human consumption.

In an embodiment, all types of paper can be coated by the composition described, resulting in a biodegradable laminated material. The biodegradable laminated material obtained can then be moulded or folded into different shapes, forming several articles. Preferably, the biodegradable laminated material can be moulded or folded to form trays, pots, plates, storage papers, packaging for liquids, packaging for frozen or cold foodstuffs, packaging for heating foodstuffs in a conventional oven or microwave oven.

In an embodiment, the articles described in the present disclosure have great stability, with a shelf life of over 6 months, under normal pressure and temperature conditions. In another embodiment, the articles described in the present disclosure have great stability, with a shelf life of over 6 months at room temperature.

In an embodiment, the articles described in the present disclosure have great stability during storage and/or the transport of products for food consumption, at cold or room temperature (at least for 6 months); in particular, fruit, pre-cooked meals, delicatessen, cheeses, vegetables, beverages, sauces, among others.

In an embodiment, the composition and articles described are compatible for contacting with fresh foodstuffs, in particular vegetables, fruit, flowers, among others, intended for consumption.

In an embodiment, the articles described in the present disclosure can be used instead of packaging and trays made of plastic, aluminium, polystyrene, aluminium and polystyrene, paperboard coated with plastic film, and carton packaging ("long life" packaging).

For the scope and interpretation of the present disclosure, the term "carton packaging" or "long life packaging" relates to an aseptic packaging for storing solid foodstuffs, liquid foodstuffs, or mixtures thereof, improving their conservation conditions. Typically, this packaging is composed of six layers of three materials: paper, responsible for the structure; low density polyethylene, responsible for the adhesion and impermeability between the layers; and aluminium, barrier against light and oxygen.

In an embodiment, both the coated substrate and the coating composition coating the same are of vegetable origin, the articles described in the present disclosure being a biodegradable and compostable vegetable product.

In an embodiment, the composition described in the present disclosure can be applied on the surface of any paper, as a coating or vegetable film, providing the coated paper with resistance to low and high temperature elements, and a protection barrier against moisture, grease, and vapours. In an embodiment, the coated paper packaging can be used to heat foodstuffs in a conventional oven or in a microwave oven.

In an embodiment, the paper coated with the composition described can be moulded by thermoforming or folding (packaging die-cutting and creasing), in order to form lunchboxes, trays, plates, take-away boxes, "long life" packaging for liquid products of all kinds, among others.

In an embodiment, the articles prepared from the paper coating with the coating composition, as described in the present disclosure, can be used as sustainable substitutes for lunchboxes and trays made of plastic, polystyrene, aluminium, paperboard with a plastic layer, and "long life" packaging with plastic and aluminium.

An aspect of the present disclosure comprises an apparatus for coating a substrate with the composition described in the present disclosure, in order to obtain the biodegradable laminated material described. In an embodiment, the apparatus comprises three blocks:
Block I - automatic mixer, where the necessary reagents for the preparation of the coating composition are mixed, in the proportion required for the formation of the coating polymer. The resulting mixture is guided to a perforated pipe, to be dispensed in Block II.
Block II - rollers, comprising three steel rollers that receive the mixture of components, formed in Block I, in the form of drops. Rollers are separated from each other by 10 to 30 µm, preferably 20 µm, according to the packaging needs.
Afterwards, the paper is inserted between the rollers, the polymer being applied on the paper, forming a uniform and protective film.
Block III - conveyor belt and oven, wherein the conveyor belt is comprised in an oven, where the coating layer of the laminated material is cured. In an embodiment, the conveyor belt is between 3 and 5 meters long, preferably between 3 and 4 meters long. In an embodiment, the coating is cured in the oven at a temperature between 100 and 150 °C, preferably between 110 and 120 °C.

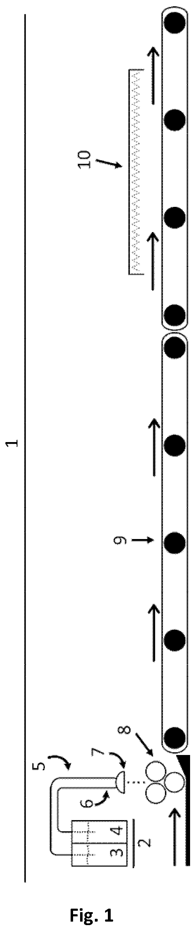

**Figure 1** represents an embodiment of apparatus **1** for coating the substrate with the composition described, which comprises:
a reservoir **2** with two compartments, a first one **3** for containing a solution of methylene diphenylisocyanate and a second compartment **4** for containing a mixture of stannous octoate and castor oil;
a mixer connected to each one of the two reservoir compartments **2** for obtaining a polymeric mixture;
a perforated dispenser **7** for distributing the polymeric mixture over a substrate,
a set of three rollers **8** arranged in such a way as to allow the substrate to pass and apply the polymeric mixture on the substrate;
a conveyor belt **9** for moving the substrate and an oven **10** for curing the coating, wherein the polymeric mixture is obtained at the mixer outlet after the reaction of the components and wherein the coated substrate is deposited by the rollers **8** on the conveyor belt **9** and guided to the oven **10** where it is cured.

In an embodiment, the volume of polymeric mixture applied on the substrate is determined by the distance between the rollers **8.**

In an embodiment, the distance between the rollers **8** ranges between 10 and 30 µm, preferably between 10 and 20 µm.

In an embodiment, the length of the conveyor belt **9** ranges between 2 and 5 meters, preferably between 2 and 4 meters; even more preferably the length of the conveyor belt **9** is 3.5 meters.

In an embodiment, the mixer is connected to reservoir **2** via hoses.

In an embodiment, the apparatus **1** for coating a substrate, preferably paper, with the composition described comprises:
a reservoir **2** with a first compartment **3** for containing a solution of methylene diphenylisocyanate and a second compartment **4** for containing a mixture of stannous octoate and castor oil;
a mixer comprising a mixing screw, wherein the mixer is connected to each one of the two compartments of reservoir **2** via two hoses **5,6** which allow the methylene diphenylisocyanate solution and the stannous octoate and castor oil mixture to pass from reservoir **2** to the mixer, and wherein the methylene diphenylisocyanate solution and the stannous octoate and castor oil mixture come into contact in the mixer forming a polymeric mixture;
a perforated pipe **7**, i.e. a dripper, attachable to the mixer, wherein the polymeric mixture enters the perforated pipe **7** coming from the mixer and is dispensed in the form of drops **11** in a set of three rollers **8** arranged in such a way as to allow the substrate to pass, wherein the distance between the rollers **8** is variable, and wherein the volume of polymeric mixture applied on the substrate is determined by the distance between rollers **8**; preferably, the distance between rollers **8** ranges between 10 and 30 µm; even more preferably, the distance between the rollers ranges between 10 and 20 µm,
a conveyor belt **9** and oven **10**, wherein the coated substrate is deposited by rollers **8** on the conveyor belt **9** and guided to oven **10** where it is dried at a temperature ranging between 100 and 150 °C; preferably, the length of the conveyor belt **9** ranges between 2 and 4 meters; most preferably, the length of the belt is 3.5 meters.

For the scope and interpretation of the present disclosure, it is defined that a roller is a cylinder body of equal diameter throughout its entire length, i.e. a cylindrically-shaped piece.

In an embodiment, the composition described can be used to obtain a biodegradable laminated material for food packaging. In an embodiment, the biodegradable laminated material comprises a substrate and a coating layer; wherein the coating layer comprises the composition described in the present disclosure. In a preferred embodiment, the substrate is selected from paper, Kraft paper, pasteboard, cardboard, vegetable fibres, food waste fibres, or mixtures thereof.

In an embodiment, the substrate of the laminated material is coated on at least one of its sides by the coating layer. In another embodiment, the thickness of the coating layer ranges between 5 and 30 µm, preferably between 10 and 20 µm.

In an embodiment, the biodegradable laminated material described in the present disclosure is obtained through the method comprising the following steps: mixing stannous octoate and castor oil to obtain a first solution, wherein the mass ratio between stannous octoate and castor oil ranges between 10:1000-20:1000; contacting the first solution with a second solution comprising methylene diphenylisocyanate in order to obtain a polymeric mixture wherein the mass ratio between the first solution and the second solution ranges between 1:1 and 3.5:1; coating the support layer with the polymeric mixture; curing the coating for 20 to 40 seconds, at a temperature between 100 and 150 °C. In a preferred embodiment, the curing time is 30 seconds, in an oven heated at 110 °C, with a belt 3.50 meters long.

In an embodiment, the laminated material described was analysed by Instituto Falcão Bauer da Qualidade (IFBQ, Brazil), according to the following procedures: PE-QUI.094 - Rev.00 -Packaging and Plastic Equipment in Contact with Foodstuffs; EN 1186-3: 2002 - *"Material and articles in contact with foodstuffs* - *Plastics* - *Part 3: Test methods for overall migration into aqueous food simulants by total immersion";* EN 1186-14: 2002 - *"Material and articles in contact with foodstuffs* - *Plastics* - *Part 14: Test methods for 'substitute tests' for overall migration from plastics intended to come into contact with fatty foodstuffs using test media iso-octane and 95% ethanol".* The analysed material complied with the chemical requirements of ANVISA Resolution No. 105 of May 19, 1999 - General Provisions for Packaging and Plastic Equipment in Contact with Food and RDC N°51 of 26/11/2010, regarding the determined parameters.

In an embodiment, the biodegradable laminated material is resistant to alcohol, no significant migration of its constituents to the medium after immersion in alcohol for 10 days at 40 °C having been observed.

In an embodiment, the biodegradable laminated material is resistant to low temperatures, preferably temperatures down to -20 °C.

In an embodiment, the biodegradable laminated material is resistant to high temperatures, preferably temperatures up to 240 °C.

In an embodiment, the biodegradable laminated material forms a protection barrier against moisture.

In an embodiment, the biodegradable laminated material forms a barrier against grease.

In an embodiment, the biodegradable laminated material forms a barrier against vapour.

The term "comprises" whenever used herein is intended to mention the presence of stated features, integers, steps, components, but not to preclude the presence or addition of one or more other indicated features, integers, steps, components or groups thereof.

The disclosure should in no way be seen restricted to the described embodiments and a person with ordinary skills in the art may foresee many possibilities of modifications thereof.

The above-described embodiments are combinable.

## Claims

1. A composition for coating a substrate, wherein the composition is obtainable by a process comprising the following steps:
mixing stannous octoate and castor oil to obtain a first solution, wherein the mass ratio between stannous octoate and castor oil ranges between 10:1000-20:1000;
contacting the first solution with a second solution comprising methylene diphenylisocyanate, wherein the mass ratio between the first solution and the second solution ranges between 1:1 and 3.5:1.

2. The coating composition according to the preceding claim, wherein the mass ratio between the first solution and the second solution ranges from 2:1 to 2.5:1, preferably the mass ratio between the first solution and the second solution is 2.5:1.

3. The coating composition according to any one of the preceding claims, wherein the mass ratio between stannous octoate and castor oil ranges from 10:1000 to 1:1000, preferably the mass ratio between stannous octoate and castor oil is 10:1000.

4. The coating composition according to any one of the preceding claims, wherein the mass ratio between the first solution and the second solution is 2.5:1; and wherein the mass ratio between stannous octoate and castor oil is 10:1000.

5. The coating composition according to any one of the preceding claims, wherein the substrate is selected from paper, Kraft paper, pasteboard, cardboard, vegetable fibres, food waste fibres, or mixtures thereof.

6. A method for obtaining a composition as described in any one of the preceding claims, comprising the following steps:
mixing stannous octoate and castor oil to obtain a first solution, wherein the mass ratio between stannous octoate and castor oil ranges from 10:1000 to 20:1000;
contacting the first solution with a second solution comprising methylene diphenylisocyanate, wherein the mass ratio between the first solution and the second solution ranges from 1:1 to 3.5: 1;
optionally curing the coating at a temperature ranging between 110 and 150 °C; for 20 to 30 seconds.

7. A biodegradable laminated material for food packaging comprising
a substrate; and
a coating layer;
wherein the coating layer comprises the composition described in any one of claims 1-5.

8. The biodegradable laminated material according to claim 7, wherein the substrate is coated on at least one of its sides by the coating layer.

9. The biodegradable laminated material according to any one of claims 7-8, wherein the thickness of the coating layer ranges between 5 and 30 µm, preferably ranging between 10 and 20 µm.

10. A method for obtaining the biodegradable laminated material described in any one of claims 7-9 comprising the steps of:
mixing stannous octoate and castor oil to obtain a first solution, wherein the mass ratio between stannous octoate and castor oil ranges from 10:1000 to 20:1000;
contacting the first solution with a second solution comprising methylene diphenylisocyanate in order to obtain a polymeric mixture wherein the mass ratio between the first solution and the second solution ranges from 1:1 to 3.5: 1;
coating a substrate with the polymeric mixture;
curing the coating for 20 to 40 seconds, preferably 30 seconds, at a temperature between 100 and 150 °C, preferably 110 °C; most preferably at 110 °C for 30 seconds.

11. The method according to claim 10 further comprising a step of moulding by thermoforming or folding the biodegradable laminated material.

12. An article comprising the composition described in any one of claims 1-5 or the biodegradable laminated material described in any one of claims 7-9.

13. Use of the article described in claim 12 for the storage, preparation and/or transport of foodstuffs.

14. An apparatus (1) for coating a substrate with the composition described in any one of claims 1-5 comprising:
a reservoir (2) with two compartments, a first one (3) for containing a solution of methylene diphenylisocyanate and a second compartment (4) for containing a mixture of stannous octoate and castor oil;
a mixer connected to each one of the two reservoir compartments (2) to obtain a polymeric mixture;
a perforated dispenser (7) for distributing the polymeric mixture over a substrate,
a set of three rollers (8) arranged in such a way as to allow the substrate to pass and apply the polymeric mixture on the substrate;
a conveyor belt for moving the substrate (9) and an oven for curing the coating (10),
wherein the polymeric mixture is obtained at the mixer outlet after the reaction of methylene diphenylisocyanate with stannous octoate and castor oil; and wherein
the coated substrate is deposited by the rollers (8) on the conveyor belt (9) and guided to the oven (10) where it is cured.

15. An apparatus according to the preceding claim, wherein the volume of polymeric mixture applied on the substrate is determined by the distance between the rollers.
